# EUROPEAN PATENT SPECIFICATION

(11) **EP 1 479 570 B1**
(45) Date of publication and mention of the grant of the patent: **14.06.2006**
(21) Application number: 02702419.9
(22) Date of filing: 26.02.2002
(51) Int. Cl.: B60R 21/18

(54) **SEAT BELT WITH BUILT-IN AIRBAG FOR VEHICLES**
SICHERHEITSGURT MIT EINGEBAUTEM AIRBAG FÜR FAHRZEUGE
CEINTURE DE SECURITE A AIRBAG INCORPORE UTILISEE DANS DES VEHICULES

(43) Date of publication of application: 24.11.2004
(73) Proprietor: Dalphi Metal Espana, S.A., 28006 Madrid (ES)
(72) Inventor: GONZALO LOPEZ, Alfredo, E-47151 Valladolid (ES); GONZALEZ GONZALEZ, Jorge, E-47151 Valladolid (ES); NIELFA DIES, Inmaculada, E-47151 Valladolid (ES)
(74) Representative: Elzaburu Marquez, Alberto
(86) International application number: PCT/ES2002/000082
(87) International publication number: WO 2003/072401

(56) References cited:
- WO-A1-99/15368
- WO-A1-99/44865
- ES-T3- 2 163 876
- US-A- 5 466 003
- US-A- 5 794 971
- US-A- 5 957 486

## Description

### FIELD OF THE INVENTION

The present invention relates to a seatbelt with integral airbag for use in vehicles in order to restrain the occupant in his seat in the event of an impact or collision of the vehicle or any other situation that jeopardizes his physical integrity by displacing him violently from his customary position, and preventing his head striking other parts of the passenger compartment and also his own knees.

### BACKGROUND OF THE INVENTION

Seatbelts and airbags are probably the two safety devices most used in motor vehicles. In the event of an impact or collision, seatbelts hold vehicle occupants in their seats, preventing inertia from displacing them, and airbags prevent occupants, still held in their seats, from possibly suffering impacts or decelerations that could cause injury.

Many of the vehicles currently marketed offer both safety means for their front seats, airbags generally being located in the steering wheel and in front of the front-seat passenger. However, the rear seats usually have only seatbelts, the presence of airbags being relatively exceptional.

The idea of combining both means is known in the prior art and initial proposals may be found, for example, in documents US 3 682 498, US 3 841 654 and US 3 970 329.

Subsequently, the prior art has been offering different devices aimed at solving specific problems, and a brief description of some of them is given below.

Document GB 2 262 720 A describes a seatbelt with an inflatable sack joined to it by means of a zip closure for allowing its possible separation if desired. The device includes a container with compressed gas and a detonator activated in response to movements of the seatbelt.

Document US 5 062 662 describes a seatbelt that carries a bag with an inflatable sack inside it. Inflation is generated in response to an impact on the part of the vehicle, opening a valve that makes it possible to introduce the compressed gas contained in a container into the inflatable sack.

Document EP 765 780 describes a seatbelt with a number of integral inflatable sacks.

Document WO 97/026983 describes a seatbelt that incorporates a tube of a special fabric that inflates in the event of an impact and that improves protection of the pelvic region.

Document WO 99/36292 describes a seatbelt with means for varying its use position in order to be able to meet the needs of different types of occupant.

Document WO 99/44865 describes a seatbelt with an integral airbag configured with parts intended for protecting different areas of the user's body, having the features of the preamble of claim 1.

### SUMMARY OF THE INVENTION

The present invention proposes a seatbelt with integral airbag that solves a number of problems not solved in the prior art.

Firstly, the seatbelt with integral airbag that is the subject of the present invention efficiently protects passengers of different sizes.

Secondly, the combined use of the belt and the airbag makes it possible more efficiently to distribute the forces to which the occupant is subjected during the deceleration that takes place in an accident. Although it will not be possible to reduce the total energy, this may be distributed more uniformly, avoiding peaks that may cause irreversible injury. In this way, it will therefore be possible to have a force limiter on the belt in order to minimize any injuries that the belt may cause when restraining the occupant, the rest of the energy being absorbed by the inflatable sack.

Thirdly, the seatbelt with airbag that is the subject of the present invention may be used both in front seats and in rear seats, and in different types of vehicle. In addition to utility vehicles, it would also be possible for it to be used for bus and aircraft passengers and also for drivers of vehicles in which the steering wheel is very horizontal and the positioning of an airbag in said steering wheel would not guarantee correct restraint of the occupant (for example, in buses and lorries).

Fourthly, in the seatbelt with integral airbag that is the subject of the present invention, deployment of the airbag is generated such that it protects its user without causing prejudicial effects for a passenger sitting alongside.

Fifthly, the seatbelt with airbag that is the subject of the present invention fully protects its user, preventing impacts against different parts of the vehicle and also contact of the head and thorax with the knees.

In order to achieve these objectives, the airbag includes a sack configured as a rectangular trapezoidal shape with its axis straight or slightly inclined to the vertical, depending on the vehicle's configuration.

The sack will be located on the waist part of the seatbelt, starting at a point very close to the first anchoring point of the belt and having a length that enables it to be adjusted and used for users of different sizes. Different options for fixing the sack to the seatbelt will be set forth below.

The sack is oriented so as to be upright during deployment by virtue of its configuration and by virtue of the pleating system used.

Another characteristic of the invention is the presence of an internal diffuser tube for controlling the direction of the gas during deployment of the sack and also for protecting the principal fabric of the sack from the high temperatures and pressures that may be achieved in the initial instants of deployment.

Another characteristic is that the gas-supply means must make it possible for the sack to be filled as smoothly as possible.

Other characteristics and advantages of the present invention will become apparent from the following detailed description of an illustrative and non-limiting embodiment of its subject, in connection with the accompanying drawings.

### DESCRIPTION OF THE FIGURES

Figure 1 is a perspective view of the seatbelt with integral airbag that is the subject of the present invention.
Figure 2 is a diagrammatic side view of a vehicle occupant protected by the seatbelt with integral airbag that is the subject of the present invention, with the inflatable sack deployed.
Figure 3 is a diagrammatic side view of vehicle occupants of different sizes protected by the seatbelt with integral airbag that is the subject of the present invention.
Figure 4 includes two diagrammatic side views illustrating the dynamics of the vehicle occupant, protected by the seatbelt that is the subject of the present invention, during a collision.
Figure 5 is a plan view of the inflatable sack of the airbag in the deployed state.
Figures 6, 7 and 8 show the stages for implementing three different sack-pleating methods.
Figures 9, 10 and 11 show different solutions for fixing the sack and the cover to the seatbelt.

In Figure 12 it is possible to see the incorporation of a rotation-prevention piece into the belt in order to attempt to make it impossible to place the belt the wrong way round.

### DETAILED DESCRIPTION OF THE INVENTION

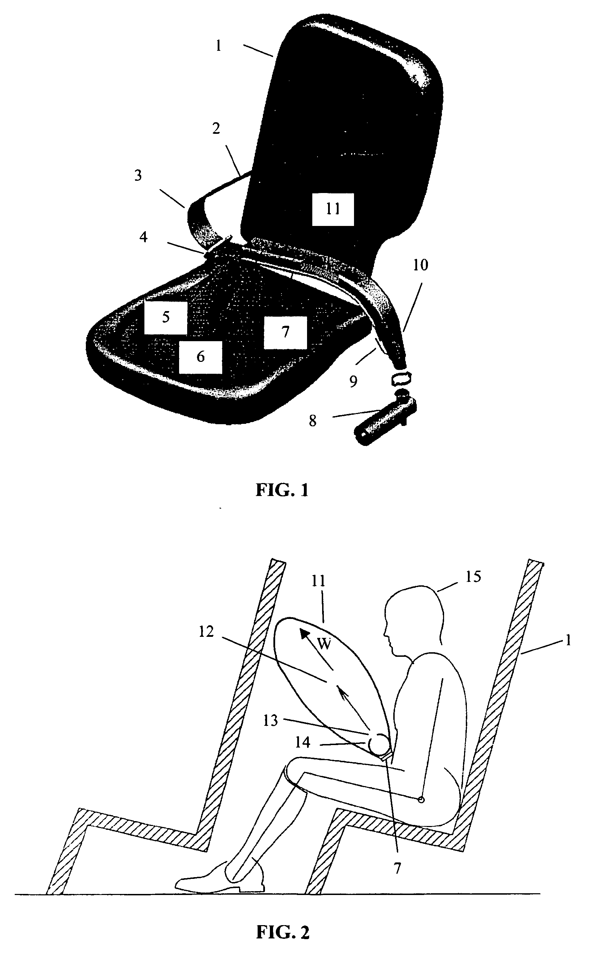

According to Figure 1, a seat 1 of a vehicle provided with a seatbelt 3 may be seen. The figure shows two anchoring points 4 and 9 for fixing the part 7 intended for the user's waist and there is also a partial illustration of the part 2 of the belt, intended for the user's torso, which would be anchored at an upper point (not shown).

Figure 1 corresponds, therefore, to a three-point seatbelt of the type used in motor vehicles, but the present invention would also be applicable to a two-point belt like those used in aircraft.

In its waist part 7, the seatbelt 3 would incorporate an airbag 11 that would be protected inside the cover 6 (in Figure 1, an imaginary separation has been made so that it is possible to see the pleated airbag inside the cover). The airbag would be located between the first anchoring point 9 and would end at the point 5 in a position in front of the second anchoring point or buckle 4. The limit defined by the point 5 is calculated in order to allow correct adjustment of the abdominal region of the belt to any size of occupant and to fulfil regulations regarding the transmission of forces through the webbing of the belt. When the belt is adjusted to suit the occupant's size, the point 5 will therefore be located in different positions for occupants of different sizes, but the airbag will protect them efficiently by virtue of the shape of the sack and the form of deployment.

The airbag would be connected via the end 10 to the gas generator 8 in order to be able to convey the gases towards the inflatable sack of the airbag. In Figure 1, the generator 8 assembly has been separated from the end 10 of the airbag in order to facilitate comprehension of the airbag's structure.

Figure 2 diagrammatically illustrates deployment of the sack 11 of the airbag upon its inflation by means of the gases supplied via the generator 8 by means known in the prior art. As may be seen, the sack is deployed from the waist part 7 of the seatbelt 3 and creates a cushion that protects the user 15 in the event of impact.

It is also possible to see a diffuser tube 14 located inside the sack 11 for correctly orientating the gases upon deployment of the sack 11. The diffuser tube 14 receives the gases from the generator 8 and subsequently, via orifices 13, directs them in the direction indicated by the arrow 12 in order to control their deployment in the direction W. The positioning and also the number, location and size of these orifices 13 may vary in order to direct the gases and the deployment as required.

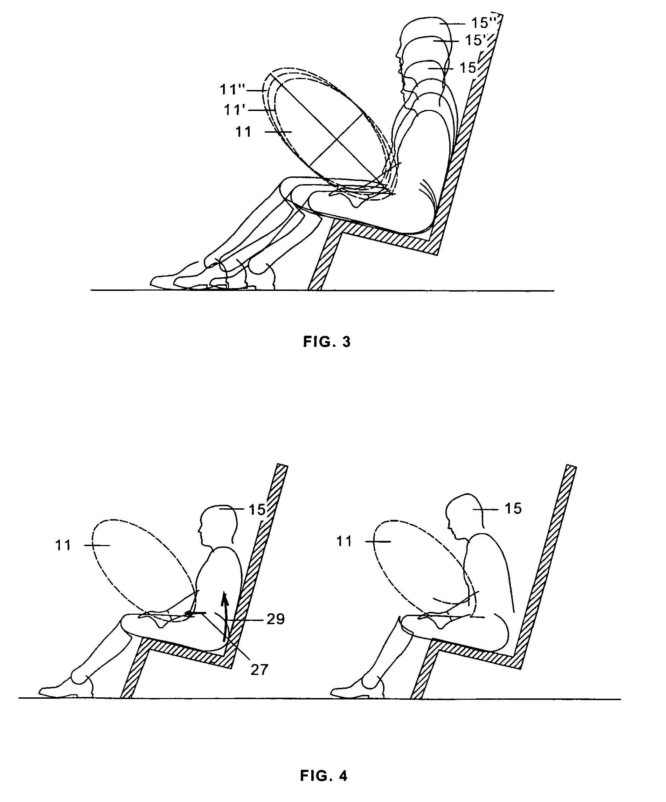

In Figure 3 it is possible to see a diagram of how the sack 11, 11', 11'' would be positioned for different sizes of occupant 15, 15', 15''. Taking into account the fact that the size of occupant affects the position the sack will have when it deploys, the shape of said sack has been optimized in order to make it possible to consider this fact and to offer protection to the majority of occupants.

In Figure 4 it is possible to see a diagram of the dynamics of the occupant 15 during an impact, in which there are translational movements 27 and rotational movements 29, and also the protective effect of the sack 11.

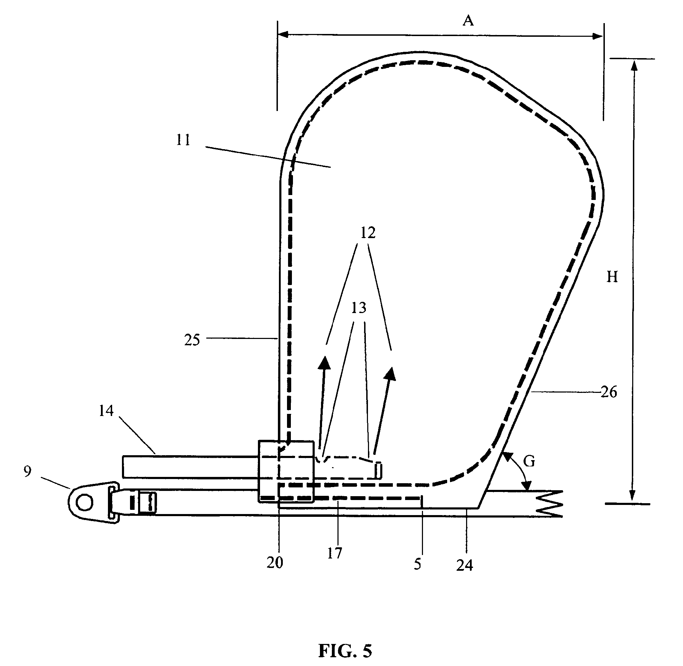

Figure 5 shows the preferred configuration of the sack 11 of the belt airbag in the deployed state, which, once pleated and located inside the cover 6 (see Figure 1) that serves to cover and protect the pleated sack and to guarantee its correct opening without interference with the sack at the instant of deployment, is mounted on the seatbelt 3 along the edge portion 17.

As may be seen, the deployed sack 11 has a rectangular trapezoidal shape, with rounded edges, in which the side 25 is perpendicular to the side 24, whilst the side 26 forms with it an angle G of less than 90°. It will also be seen that the fixing zone 17, located between the positions 20 and 5, does not extend over the entire length of the side 24, leaving a free part on the right.

The selection of a geometry of this type for the sack 11 is aimed at protecting different sizes of occupant, their position with respect to the belt always being the same. When the size of occupant varies, the volume of the pelvis and of the abdominal region thereof varies such that when the belt 3 is buckled, and depending on the size of occupant, the sack 11 will be positioned in different locations. As the size of occupant increases, the sack will tend to be positioned towards the side where the fixed anchoring point 9 is located. The side 25 is the critical safety limit for protecting small occupants, whilst the side 26 is the critical safety limit for protecting large occupants and is not parallel to the side 25 but inclined, since it was observed that the sack 11 tends to be positioned towards the anchoring point 9 when the size of occupant increases.

As stated previously, that part of the base of the sack that is located furthest from the anchoring point 9 is not fixed to the belt 3 in order thereby to limit the length over which the sack is pleated and to be able to allow adjustment of the abdominal region 7 of the belt to different sizes of occupant and to comply with regulations on the transmission of forces in the belt. If the fixing of the sack 11 were to extend beyond the point 5, there is a risk of being unable to adjust the abdominal region of the belt 7 properly for small occupants. The reason for not limiting the sack base 24 - only to the length 17 used for fixing to the belt - is because when the base 24 is increased it is possible to increase the stability of the sack upon deployment.

At one of the lower ends, and depending on which side the first anchoring point 9 is located in the vehicle (see Figure 1), there will be a tube for conveying the gas from the generator 8 (see Figure 1) towards the inside of the sack. The tube part that is inside the sack will act as diffuser and will make it possible to direct the gas through the orifices 13 in the direction indicated by the arrows 12. For its part, the sack must have a width A and a height H suitable for being able to cover and to protect the majority of different sizes of occupant, reaching as far as an occupant's head. It is considered that, with A dimensions of between 500 and 600 mm and with H dimensions of between 750 and 850 mm, it is possible to cover the majority of potential situations.

The sack 11 is positioned longitudinally with respect to the belt 3, depending on the structural characteristics of each vehicle, or in other words the distance between the anchoring point 9 and the side 25 of the sack 11 will be calculated in each vehicle in order to offer the best protection to all sizes of occupant. In turn, the position of the sack 11 is also conditioned by the fact that it is necessary to prevent injury to the arms during deployment, and therefore the position of the side 25 of the sack and also the length of the tube 14 play a fundamental role in preventing this effect.

It was observed in experiments that, with sacks configured in the way just explained and by pleating the sack as will be indicated below, deployment can be successfully achieved without causing injury to vehicle passengers in adjacent seats, in addition providing protection, once deployed, to different sizes of occupant who may wear it in a duly buckled seatbelt.

For its part, the generator 8 (see Figure 1) must be dimensioned in order to supply the gas mass that is sufficient to be able to fill the sack within a suitable period of time, and as smoothly as possible, to which end the various parameters affecting the gas flow will be adjusted in order to make said flow as non-aggressive as possible.

Although Figure 5 shows the case in which the first anchoring point 9 is located on the left side, the design is also valid for cases in which said anchoring point is on the right side, since both configurations are connected by symmetry relative to the vertical. In conclusion, the sack could be the same for both configurations, the only difference being the operation of fixing to the seatbelt.

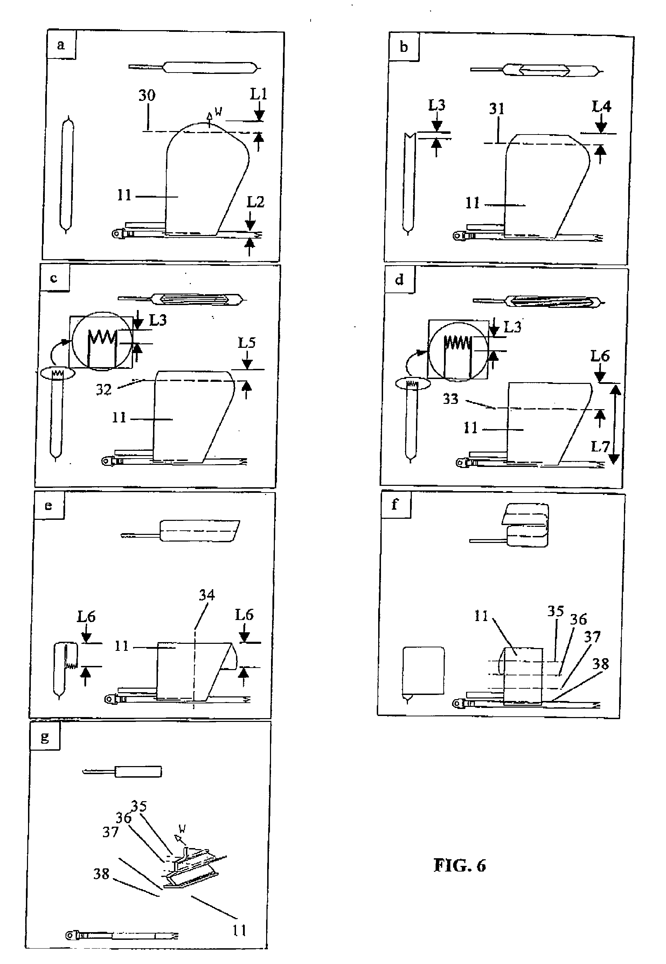

In Figures 6, 7 and 8 it is possible to see different pleating methods, each figure showing the fundamental steps in each method by means of plan and lateral-profile views of the sack.

Thus, for example, Figure 6 shows, firstly, and in a series of steps (b), (c), (d), successive pleats made towards the inside of the sack 11 (this may be seen in greater detail in the side views), the width of said pleats L3 being similar to that of the seatbelt L2. The dimensions of L1 are similar to those of the width of the belt L2, whilst the dimensions of L4 and L5 are of the order of double the width of the belt L2. The lines 30, 31, 32, 33, 34, 35, 36, 37, 38 indicate where the next steps in the pleating method will take place. Subsequently, in step (e), the pleat illustrated in the figure will be made and this will subsequently condition the inclination of the sack 11 during deployment. If the length L6 increases, deployment will be more horizontal, whilst if said length decreases deployment will be more vertical.

In step (f) a pleat is made so that the sack does not extend beyond its limit position on the belt over a line 34 corresponding to the position 5 of Figures 1 and 5. Lastly, in step (g), accordion-style pleats are made, orienting the pleat that remains in the upper part suitably so that, during inflation of the sack, the correct opening of the cover and subsequent deployment in a diagonal direction W without injury to the occupant can take place (see, also, Figure 2). The width of these pleats will also be similar to the width of the webbing of the belt such that the entire pleated assembly has a width similar to that of the belt. The use of the first inward pleats will facilitate deployment of the sack since the resistance offered by the sack upon deployment will be less.

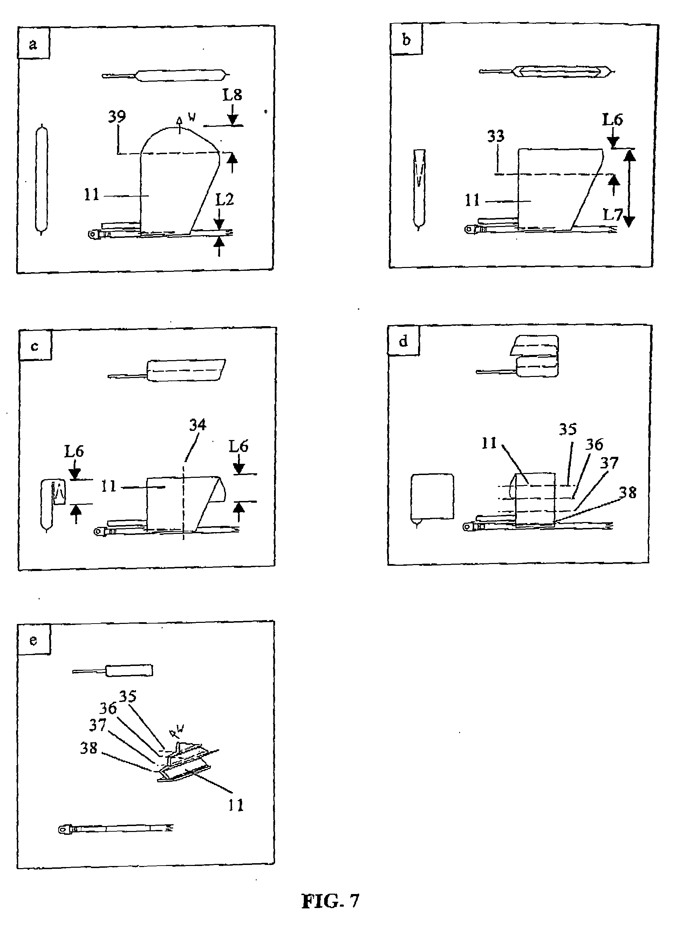

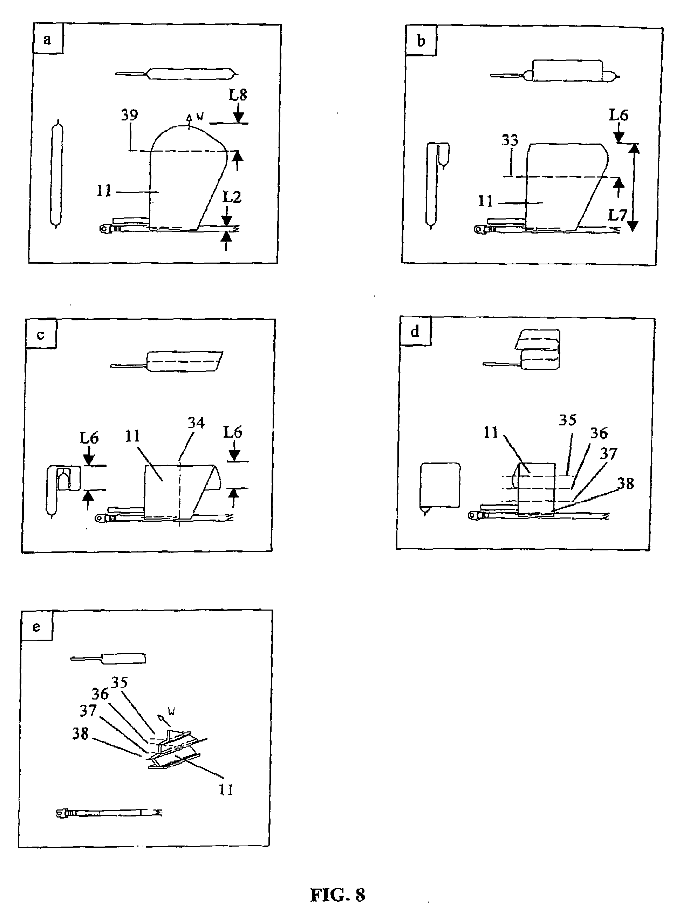

Figures 7 and 8 show other pleating methods that may be used in the belt airbag, it also being possible to form pleating that is a combination of all of them.

The pleating method shown in Figure 7 is similar to that of Figure 6 except that the successive pleats towards the inside of the sack in the initial steps (b), (c) and (d) of the pleating of Figure 6 have been replaced by a single pleat towards the inside of the sack in Figure 7. Thus, starting from the position (a), the position (b) is achieved by means of a single pleating operation on the line 39. Bearing in mind that in Figure 7 L6 and L7 are identical to L6 and L7 in Figure 6, the length L8 is equivalent to approximately five times the width of the belt L2. The remaining steps would be identical.

As regards the pleating method shown in Figure 8, the sole difference with respect to that of Figure 7 lies in the first pleat that is not made towards the inside of the sack but by means of the fold illustrated in step (b).

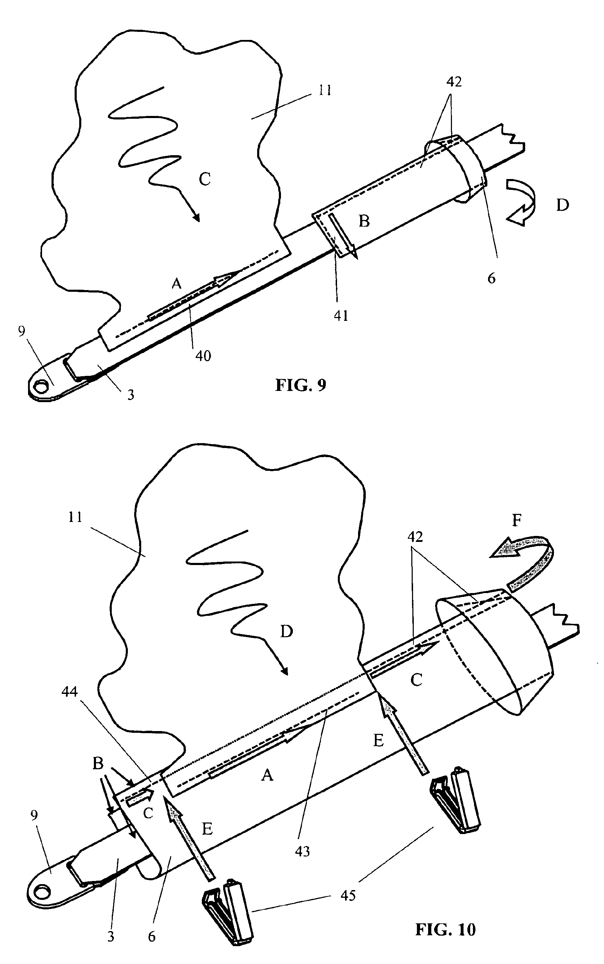

The general functioning having been described, a description will now be given of different embodiments for fixing the airbag to the seatbelt, with reference to Figures 9, 10 and 11.

In Figure 9, it may be seen that the sack 11 and the cover 6 are fixed directly to the belt 3 by means of stitching. The stitching 40 fixes the sack 11 to the belt and the stitching 41 fixes the cover 6 to the belt 3. The line 42 indicates a weak zone that is to tear in a programmed manner during deployment of the sack.

Assembly and mounting of the airbag in the sack takes place preferably in the next sequence.

In a first operation represented by the arrow A the sack 11 is sewn to the belt 3.

In a second operation represented by the arrow B the cover 6 is sewn to the belt 3.

In a third operation represented by the arrow C the sack 11 is pleated in accordance with one of the methods described above.

In a fourth operation represented by the arrow D the cover 6 is turned inside out in order to protect the sack 11, preventing the stitching 41 made being seen and being accessible.

In Figure 10, the sack 11 is fixed directly to the cover 6 via the stitching 43 and subsequently the cover 6 encloses the belt 3 in order, later, to close the ends with the stitching 44, which will coincide with the stitching 42. The clips 45 will prevent the sack/cover assembly from being able to move with respect to the belt 3. With this solution, we can prevent damage to the belt when a needle passes through it in order to perform stitching. It should also be pointed out that, in this solution, only that part of the cover that is turned inside out should open in a programmed manner during deployment, the part that is between the clips remaining intact in order to be able to keep the sack joined to the belt.

Assembly and mounting of the airbag in the sack takes place preferably in the following sequence.

In a first operation represented by the arrow A the sack 11 is sewn to the cover 6.

In a second operation represented by the arrow B the cover 6 is positioned so as to enclose the belt 3.

In a third operation represented by the arrow C the edges of the cover 6 are sewn together.

In a fourth operation represented by the arrow D the sack 11 is pleated in accordance with one of the methods described above.

In a fifth operation represented by the arrow E the cover 6 is fixed with the clips 45.

In a sixth operation represented by the arrow F the cover 6 is turned inside out in order to protect the sack 11 and to prevent access to the stitching.

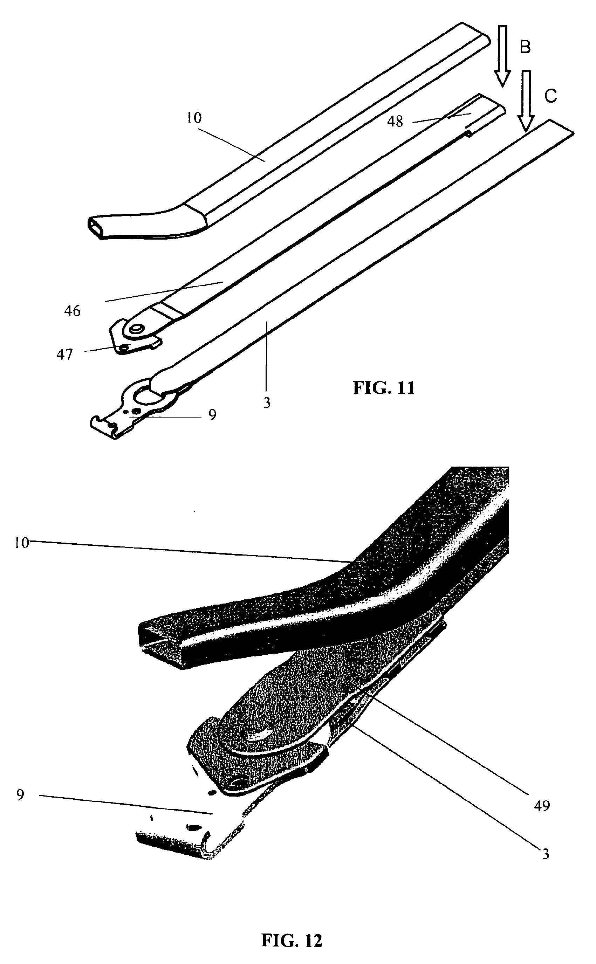

In Figure 11, the airbag 11, which would be produced in a manner similar to those described previously, is fixed directly to a plastic piece 46 (operation represented by the arrow B) and then this plastic piece is fixed to the belt 3 (operation represented by the arrow C). As an advantage of this embodiment, it is possible to point out that at no point is the belt damaged since fixing takes place via the ends 47 and 48, one of the fixings being in the anchoring point and the other enclosing the belt and allowing a small relative sliding between the plastic piece 46 and the belt 3. The fact that in this configuration there is a small relative sliding between the airbag and the belt will give rise, during an impact, to better adjustment of the abdominal region of the belt over the occupant, improving restraint of the pelvis. In turn, the plastic piece 46 must be sufficiently flexible in order not to affect comfort, and must not be able to twist permanently in order to prevent the airbag being able to be positioned the wrong way round, which could give rise to deployments of the bag towards the occupant. The fixing end 48 may be a definitive fixing, not allowing separation of airbag and belt, or, on the other hand, may be an optional fixing in accordance with the occupant's wishes.

In all the cases described, the cover 6 could be a piece having a tubular shape, with a weakened zone allowing programmed opening during deployment. Said weakened zone may be achieved with breakable stitching.

For cases in which the airbag's flexibility makes twisting of the abdominal region of the belt very easy, and in order to prevent possible deployment towards the occupant, it is possible to see in Figure 12 that an anti-rotation plate 49 is incorporated, which makes it difficult for the belt to twist, thereby alerting the occupant to the poor positioning of the belt. The anti-rotation plate would be fixed next to the anchoring point and would subsequently enclose the webbing of the belt. If an attempt were made to twist the airbag/belt assembly, reaction forces would be produced in the region of the anti-rotation plate resting on the anchoring point, making twisting difficult.

Although one embodiment of the invention has been described and shown, modifications included within the scope of the invention may obviously be introduced into it, and the scope should not be regarded as being limited to said embodiment but to the content of the following claims.

## Claims

1. Vehicle seatbelt (3) with an airbag (10) consisting of an inflatable sack (11) connected to a gas-supply source (8) incorporated into the belt (3) in its waist part (7), such that the sack (11) is located between a predefined first position (20) close to the first anchoring point (9) of the belt (3) and a predefined second position (5) such that the airbag (10) is fitted over the waist of the occupant (15), between the buckles (9, 4) for different sizes of occupant (15, 15', 15'') and including an external cover (6) of tubular shape with weakened lines (42) for allowing deployment of the sack (11) when a collision arises and its inflation is initiated, **characterized in that** the sack (11) in the deployed state has an irregular trapezoidal configuration with rounded edges in which, of the two sides (25, 26) adjacent to the side (24) for incorporating the seatbelt (3), the side (25) nearer the first anchoring point (9) is perpendicular to said side (24) and the other adjacent side (26) forms with it an angle G of less than 90°.

2. Seatbelt (3) with integral airbag (10) according to Claim 1, **characterized in that** the sack (11) and the cover (6) are fixed to the belt (3) by means of stitching (40, 41).

3. Seatbelt (3) with integral airbag (10) according to Claim 1, **characterized in that** the sack (11) is fixed to the cover (6) by means of stitching (43) and the cover (6) is fixed to the belt by means of clips (45) and stitching (44) at the ends thereof.

4. Seatbelt (3) with integral airbag (10) according to Claim 1, **characterized in that** the airbag (10) is fixed to a plastic piece (46) and both airbag and plastic piece together are fixed to the belt (3) by means of anchoring means (47, 48) arranged at the ends thereof.

5. Seatbelt (3) with integral airbag (10) according to any of the preceding claims, **characterized in that** the airbag (10) includes a diffuser tube (14) with orifices (13) for orientating the gas flow during deployment.

6. Method for pleating a sack (11) of an airbag (10) incorporated into a seatbelt (3) according to any of Claims 1-5, **characterized in that** it includes the following steps:
(a) pleating a first part of the sack (11) towards the inside of the latter in pleats having a width similar to that of the belt (3) along axes (30, 31, 32) parallel to the belt (3);
(b) folding the sack (11) resulting from the previous step on an axis (33) parallel to the belt (3) and located at a predetermined distance from the base of the sack;
(c) folding the sack (11) resulting from the previous step on an axis (34) perpendicular to the belt (3) and located in the predefined position (5) of termination of the airbag (10); and
(d) pleating the sack (11) resulting from the previous step in accordion-style pleats parallel to the belt (3), the width of said pleats being similar to the width of the belt (3).

7. Method for pleating a sack (11) of an airbag (10) incorporated into a seatbelt (3) according to any of Claims 1-5, **characterized in that** it includes the following steps:
(a) pleating a first part of the sack (11) towards the inside of the latter in a pleat having a width greater than that of the belt (3) along an axis (39) parallel to the belt (3);
(b) folding the sack (11) resulting from the previous step on an axis (33) parallel to the belt (3) and located at a predetermined distance from the base of the sack;
(c) folding the sack (11) resulting from the previous step on an axis (34) perpendicular to the belt (3) and located in the predefined position (5) of termination of the airbag (10); and
(d) pleating the sack (11) resulting from the previous step in accordion-style pleats parallel to the belt (3), the width of said pleats being similar to the width of the belt (3).

8. Method for pleating a sack (11) of an airbag (10) incorporated into a seatbelt (3) according to any of Claims 1-5, **characterized in that** it comprises the following steps:
(a) folding a first part of the sack (11) towards the inside of the latter in a width greater than that of the belt (3) on an axis (39) parallel to the belt (3);
(b) folding the sack (11) resulting from the previous step on an axis (33) parallel to the belt (3) and located at a predetermined distance from the base of the sack;
(c) folding the sack (11) resulting from the previous step on an axis (34) perpendicular to the belt (3) and located in the predefined position (5) of termination of the airbag (10); and
(d) pleating the sack (11) resulting from the previous step in accordion-style pleats parallel to the belt (3), the width of said pleats being similar to the width of the belt (3).

## Patentansprüche

1. Fahrzeug-Sitzgurt (3) mit einem Airbag (10), bestehend aus einem mit einer Gasversorgungsquelle (8) verbundenen aufblasbaren Sack (11), der im Bauchabschnitt (7) des Gurtes (3) aufgenommen ist, so dass sich der Sack (11) zwischen einer vorbestimmten ersten Position (20) nahe dem ersten Verankerungspunkt (9) des Gurtes (3) und einer vorbestimmten zweiten Position (5) befindet, so dass der Airbag (10) über dem Bauch des Insassen (15), zwischen den Gurtschnallen (9, 4) für verschiedene Größen des Insassen (15, 15', 15''), angebracht ist, und eine außen liegende Abdeckung (6) von schlauchartiger Form mit abgeschwächten Reihen (42) einschließt, die ein Entfalten des Sackes (11) zulassen, wenn eine Kollision auftritt und sein Aufblasen ausgelöst wird, **dadurch gekennzeichnet, dass** der Sack (11) im entfalteten Zustand eine unregelmäßige trapezförmige Gestalt mit abgerundeten Rändern hat, in welcher von den beiden Seiten (25, 26), die an die Seite (24) angrenzen, an der der Sitzgurt (3) eingebaut ist, die Seite (25), die näher dem ersten Verankerungspunkt (9) ist, senkrecht zu dieser Seite (24) ist, und die andere angrenzende Seite (26) mit ihr einen Winkel G von weniger als 90° bildet.

2. Sitzgurt (3) mit integriertem Airbag (10) nach Anspruch 1, **dadurch gekennzeichnet, dass** der Sack (11) und die Abdeckung (6) mit Hilfe von Nähten (40, 41) an dem Gurt (3) befestigt sind.

3. Sitzgurt (3) mit integriertem Airbag(10) nach Anspruch 1, **dadurch gekennzeichnet, dass** der Sack (11) mittels einer Naht (43) an der Abdeckung (6) befestigt ist, und dass die Abdeckung (6) mittels Klammern (45) und einer Naht (44) an den Enden des Gurts (3) befestigt ist.

4. Sitzgurt (3) mit integriertem Airbag(10) nach Anspruch 1, **dadurch gekennzeichnet, dass** der Airbag (10) an einem Kunststoffteil (46) befestigt ist und beide, Airbag und Kunststoffteil, zusammen mit Hilfe von Verankerungsmitteln (47, 48) am Gurt (3) befestigt sind, die an dessen Enden angeordnet sind.

5. Sitzgurt (3) mit integriertem Airbag(10) nach einem der vorhergehenden Ansprüche, **dadurch gekennzeichnet, dass** der Airbag (10) ein Diffusor-Rohr (14) mit Öffnungen (13) zum Lenken des Gasstrom während des Enfaltens einschließt.

6. Verfahren zum Plissieren eines Sackes (11) eines Airbags (10), der in einem Sitzgurt (3) aufgenommen ist, nach einem der Ansprüche 1-5, **dadurch gekennzeichnet, dass** es die folgenden Schritte umfasst:
a) Plissieren eines ersten Abschnitts des Sackes (11) in Richtung der Innenseite des Letzteren in Falten, die eine Breite gleich der des Gurtes (3) haben, entlang von Achsen (30, 31, 32) parallel zum Gurt (3);
b) Falten des aus dem vorhergehenden Schritt resultierenden Sackes (11) an einer Achse (33), die parallel zu dem Gurt (3) und in einem vorbestimmten Abstand vom Boden des Sackes angeordnet ist,
c) Falten des aus dem vorhergehenden Schritt resultierenden Sackes (11) an einer Achse (34), die senkrecht zu dem Gurt (3) und in einer vorbestimmten Endposition (5) des Airbags (10) angeordnet ist; und
d) Plissieren des aus dem vorhergehenden Schritt resultierenden Sackes (11) in Akkordeon-artigen Falten parallel zu dem Gurt (3), die Breite der Falten ist dabei gleich der Breite des Gurtes (3).

7. Verfahren zum Plissieren eines Sackes (11) eines Airbags (10), der in einem Sitzgurt (3) aufgenommen ist, nach einem der Ansprüche 1-5, **dadurch gekennzeichnet, dass** es die folgenden Schritte umfasst:
a) Plissieren eines ersten Abschnitts des Sackes (11) in Richtung der Innenseite des Letzteren in einer Falte, die eine größere Breite als die des Gurtes (3) hat, entlang einer Achse (39) parallel zu dem Gurt (3),
b) Falten des aus dem vorhergehenden Schritt resultierenden Sackes (11) an einer Achse (33), die parallel zu dem Gurt (3) und in einem vorbestimmten Abstand vom Boden des Sackes angeordnet ist,
c) Falten des aus dem vorhergehenden Schritt resultierenden Sackes (11) an einer Achse (34), die senkrecht zu dem Gurt (3) und in einer vorbestimmten Endposition (5) des Airbags (10) angeordnet ist; und
d) Plissieren des aus dem vorhergehenden Schritt resultierenden Sackes (11) in Akkordeon-artigen Falten parallel zu dem Gurt (3), die Breite der Falten ist dabei gleich der Breite des Gurtes (3).

8. Verfahren zum Plissieren eines Sackes (11) eines Airbags (10), der in einem Sitzgurt (3) aufgenommen ist, nach einem der Ansprüche 1-5, **dadurch gekennzeichnet, dass** es die folgenden Schritte umfasst:
a) Falten eines ersten Abschnitts des Sackes (11) in Richtung der Innenseite des Letzteren in einer Breite größer als die des Gurtes (3) an einer Achse (39) parallel zu dem Gurt (3);
b) Falten des aus dem vorhergehenden Schritt resultierenden Sackes (11), an einer Achse (33), die parallel zu dem Gurt (3) und in einem vorbestimmten Abstand vom Boden des Sackes angeordnet ist,
c) Falten des aus dem vorhergehenden Schritt resultierenden Sackes (11) an einer Achse (34), die senkrecht zu dem Gurt (3) und in einer vorbestimmten Endposition (5) des Airbags (10) angeordnet ist; und
d) Plissieren des aus dem vorhergehenden Schritt resultierenden Sackes (11) in Akkordeon-artigen Falten parallel zu dem Gurt (3), die Breite der Falten ist dabei gleich der Breite des Gurtes (3).

## Revendications

1. Ceinture de sécurité de véhicule (3) comportant un dispositif de sac gonflable (10) constitué d'un sac gonflable (11) connecté à une source d'alimentation en gaz (8) incorporé dans la ceinture (3) dans sa partie taille (7), de telle manière que le sac (11) est situé entre un premier emplacement (20) défini au préalable, très proche du premier point d'ancrage (9) de la ceinture (3) et un deuxième emplacement prédéfini (5), de telle sorte que le dispositif de sac gonflable (10) est monté au-dessus de la taille de l'occupant (15) entre les boucles (9, 4) pour des corpulences différentes des occupants (15, 15', 15"), et comprenant une enveloppe extérieure (6) de forme tubulaire munie de lignes affaiblies (42) en vue de permettre le déploiement du sac (11) lorsqu'une collision se produit et que son gonflage est amorcé, **caractérisée en ce que** le sac (11), à l'état déployé, a une configuration de trapèze irrégulier, comportant des bords arrondis dans laquelle, des deux côtés (25, 26) voisins du côté (24) destiné à incorporer la ceinture de sécurité (3), le côté (25) le plus proche du premier point d'ancrage (9) est perpendiculaire audit côté (24) et l'autre côté voisin (26) forme avec celui-ci un angle G inférieur à 90°.

2. Ceinture de sécurité comportant un dispositif de sac gonflable incorporé (10) selon la revendication 1, **caractérisée en ce que** le sac (11) et l'enveloppe (6) sont fixés à la ceinture au moyen d'une couture (40, 41).

3. Ceinture de sécurité (3) comportant un dispositif de sac gonflable incorporé (10) selon la revendication 1, **caractérisée en ce que** le sac (11) est fixé à l'enveloppe au moyen d'une couture (43) et **en ce que** l'enveloppe (6) est fixée à la ceinture au moyen de pinces (45) et d'une couture (44), à ses extrémités.

4. Ceinture de sécurité (3) comportant un dispositif de sac gonflable incorporé (10) selon la revendication 1, **caractérisée en ce que** le dispositif de sac gonflable (10) est fixé à une pièce en matière plastique (46) et **en ce que** le sac gonflable, ainsi que la pièce de matière plastique étant fixés ensemble à la ceinture (3) à l'aide de moyens d'ancrage (47, 48) agencés à leurs extrémités.

5. Ceinture de sécurité (3) comportant un dispositif de sac gonflable incorporé (10) selon l'une quelconque des revendications qui précèdent, **caractérisée en ce que** le dispositif de sac gonflable (10) comprend un tube de diffusion (14) comportant des orifices (13) destinés à orienter l'écoulement du gaz pendant le déploiement.

6. Procédé de formation de plis sur un sac (11) de dispositif de sac gonflable (10), incorporé dans une ceinture de sécurité (3) selon l'une quelconque des revendications 1 à 5, **caractérisé en ce qu'**il comprend les étapes qui suivent :
(a) formation de plis sur une première partie du sac (11) en direction de l'intérieur de ce dernier, les plis ainsi formés ayant une largeur similaire à celle de la ceinture (3) le long d'axes (30, 31, 32) parallèles à la ceinture (3) ;
(b) pliage du sac (11) résultant de l'étape qui précède sur un axe (33) parallèle à la ceinture (3) et situé à une distance prédéterminée de la base du sac ;
(c) pliage du sac (11) résultant de l'étape qui précède, sur un axe (34) perpendiculaire à la ceinture (3) et situé à l'emplacement (5), défini au préalable, de terminaison du dispositif de sac gonflable (10) ; et
(d) formation de plis sur le sac (11) résultant de l'étape qui précède, ces plis étant du genre en accordéon et parallèles à la ceinture (3), la largeur desdits plis étant similaire à la largeur de la ceinture (3).

7. Procédé de formation de plis sur un sac (11) de dispositif de sac gonflable (10) incorporé dans une ceinture de sécurité (3) selon l'une quelconque des revendications 1 à 5, **caractérisé en ce qu'**il comprend les étapes suivantes :
(a) formation d'un pli sur une première partie du sac (11) en direction de l'intérieur de ce dernier, le long d'un axe (39) parallèle à la ceinture (3), le pli ayant une largeur supérieure à celle de la ceinture (3) ;
(b) pliage du sac (11) résultant de l'étape qui précède sur un axe (33) parallèle à la ceinture (3) et situé à une distance prédéterminée par rapport à la base du sac ;
(c) pliage du sac (11) résultant de l'étape qui précède sur un axe (34) perpendiculaire à la ceinture (3) et situé à l'emplacement (5), défini au préalable, de terminaison du dispositif de sac gonflable (10) ; et
(d) formation de plis sur le sac (11) résultant de l'étape qui précède, ces plis étant du genre accordéon et parallèles à la ceinture (3), la largeur desdits plis étant similaire à la largeur de la ceinture (3).

8. Procédé de formation de plis sur un sac (11) de dispositif de sac gonflable (10) incorporé dans une ceinture de sécurité (3) selon l'une quelconque des revendications 1 à 5, **caractérisé en ce qu'**il comprend les étapes qui suivent :
(a) pliage d'une première partie du sac (11) en direction de l'intérieur de ce dernier, sur un axe (39) parallèle à la ceinture (3), en lui donnant une largeur supérieure à celle de la ceinture (3) ;
(b) pliage du sac (11) résultant de l'étape qui précède sur un axe (33) parallèle à la ceinture (3) et situé à une distance prédéterminée de la base du sac ;
(c) pliage du sac (11) résultant de l'étape qui précède sur un axe (34) perpendiculaire à la ceinture (3) et situé à l'emplacement, défini au préalable (5), de terminaison du dispositif de sac gonflable (10) ; et
(d) formation de plis sur le sac (11) résultant de l'étape qui précède, ces plis étant du genre accordéon et étant parallèles à la ceinture (3), la largeur desdits plis étant similaire à la largeur de la ceinture (3).
